(19) Europäisches Patentamt / European Patent Office / Office européen des brevets

(11) **EP 3 262 748 B1**

(12) **EUROPÄISCHE PATENTSCHRIFT**

(45) Veröffentlichungstag und Bekanntmachung des Hinweises auf die Patenterteilung:
**19.10.2022 Patentblatt 2022/42**

(21) Anmeldenummer: **16700502.4**

(22) Anmeldetag: **14.01.2016**

(51) Internationale Patentklassifikation (IPC):
**H02P 6/182** *(2016.01)*    **H02P 21/13** *(2006.01)*
**H02P 21/24** *(2016.01)*    **H02P 21/04** *(2006.01)*

(52) Gemeinsame Patentklassifikation (CPC):
**H02P 6/182; H02P 21/04; H02P 21/13; H02P 21/24**

(86) Internationale Anmeldenummer:
**PCT/EP2016/050698**

(87) Internationale Veröffentlichungsnummer:
**WO 2016/134877 (01.09.2016 Gazette 2016/35)**

(54) **SCHALTUNGSANORDNUNG UND SENSORLOSES KOMMUTIERUNGSVERFAHREN**

CIRCUIT ARRANGEMENT AND SENSORLESS COMMUTATION METHOD

DISPOSITION DES CIRCUITS ET PROCÉDÉ DE COMMUTATION SANS CAPTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.02.2015 DE 102015102565**

(43) Veröffentlichungstag der Anmeldung:
**03.01.2018 Patentblatt 2018/01**

(73) Patentinhaber: **EBM-Papst Mulfingen GmbH&CO. KG**
**74673 Mulfingen (DE)**

(72) Erfinder: **SCHNEIDER, Fabian**
**74585 Rot am See (DE)**

(74) Vertreter: **Staeger & Sperling Partnerschaftsgesellschaft mbB**
**Sonnenstraße 19**
**80331 München (DE)**

(56) Entgegenhaltungen:
**EP-A2- 1 758 240**

• **ROLANDO P BURGOS ET AL: "Design and Evaluation of a PLL-Based Position Controller for Sensorless Vector Control of Permanent-Magnet Synchronous Machines", IEEE INDUSTRIAL ELECTRONICS, IECON 2006 - 32ND ANNUAL CONFERENCE ON, IEEE, PISCATAWAY, NJ, USA, 1. November 2006 (2006-11-01), Seiten 5081-5086, XP031077770, ISBN: 978-1-4244-0135-2**
• **LIN QINGHUA ET AL: "A novel position detection method of sensorless brushless DC motor based on sliding mode observer", POWER ELECTRONICS SYSTEMS AND APPLICATIONS (PESA), 2011 4TH INTERNATIONAL CONFERENCE ON, IEEE, 8. Juni 2011 (2011-06-08), Seiten 1-5, XP031925352, DOI: 10.1109/PESA.2011.5982898 ISBN: 978-1-4577-0205-1**
• **OLIVIERI C ET AL: "A novel PLL scheme for a sensorless PMSM drive overcoming common speed reversal problems", POWER ELECTRONICS, ELECTRICAL DRIVES, AUTOMATION AND MOTION (SPEEDAM), 2012 INTERNATIONAL SYMPOSIUM ON, IEEE, 20. Juni 2012 (2012-06-20), Seiten 1051-1056, XP032221790, DOI: 10.1109/SPEEDAM.2012.6264468 ISBN: 978-1-4673-1299-8**

EP 3 262 748 B1

**Beschreibung**

Die Erfindung betrifft eine Schaltungsanordnung und ein Verfahren zur sensorlosen Kommutierung von elektronisch kommutierten Synchronmaschinen, wie z. B. EC-Motoren.

Aus dem Stand der Technik sind diverse EC-Motoren bekannt. So wird zum Beispiel in der elektrischen Antriebstechnik der bürstenlose Gleichstrommotor (BLDC; Brushless DC Motor) immer beliebter. Da es bei diesem Motorentyp keinen mechanischen oder elektrischen Kontakt zwischen Stator und Rotor des BLDC-Motors gibt, sind zur Bestimmung ihrer relativen Position alternative Anforderungen an die Motorsteuerung erforderlich. Für BLDC-Motoren gibt es dazu zwei mögliche Methoden: entweder die sensorgesteuerte oder sensorlose Kommutierung.

Bei der sensorgesteuerten Kommutierung werden z.B. Hall-Sensoren zur Erfassung des magnetischen Flusses des Rotors oder optische Sensoren im Bereich des Stators eingesetzt. Entsprechend der konkreten Stellungsinformation werden über geeignete Leistungstreiber von der Steuerelektronik die Rotorwicklungen angesteuert, um ein Drehmoment zu erzeugen.

Eine alternative Methode ist die sensorlose Kommutierung bei der z. B. die Messung der rückwirkenden EMK zur Positionsbestimmung herangezogen wird. Die Erfassung der Rotorposition erfolgt mit Hilfe einer Steuerung, die die in den Spulen des Stators ausgelöste Gegenspannung auswerten kann. Allerdings ist zur Auswertung der Gegenspannung eine gewisse Mindestdrehzahl erforderlich. Dies hat zur Folge, dass sensorlose EC-Motoren bis zum Erreichen der Mindestdrehzahl blind kommutiert werden müssen.

Aus den Druckschriften US 2010/0181952 A1, EP 2 061 147 A2, US 8,294,397 B2, US 7,334,854 B1 und EP 1 758 240 A2 sind zum Beispiel Verfahren bekannt, die sich mit der sensorlosen Kommutierung beim Motoranlauf beschäftigen.

Aus den Druckschriften US 8,340,848 B2 und US 8,760,098 B2 sind ferner Verfahren für eine sensorlose Kommutierung im Normalbetrieb bekannt.

Ferner beschäftigten sich die folgenden Publikationen mit Positionsdetektionsverfahren bei elektrisch angetriebenen Motoren.

Die Publikation von ROLANDO P BURGOS ET AL: "Design and Evaluation of a PLL-Based Position Controller for Sensorless Vector Control of PermanentMagnet Synchronous Machines", IEEE INDUSTRIAL ELECTRONICS, IECON 2006 -32ND ANNUAL CONFERENCE ON, IEEE, PISCATAWAY, NJ, USA, 1. November 2006 (2006-11-01), Seiten 5081 -5086, XP031077770, ISBN: 978-1-4244-0135-2 beschäftigt sich mit Design und Evaluierung eines PLLbasierten Positionsreglers zur sensorlosen Vektorregelung von Permanentmagnet-Synchronmaschinen.

Die Publikation von LIN QINGHUA ET AL: "A novel position detection method of sensorless brushless DC motor based on sliding mode observer", POWER ELECTRONICS SYSTEMS AND APPLICATIONS (PESA), 2011 4TH INTERNATIONAL CONFERENCE ON, IEEE, 8. Juni 2011 (2011-06-08), Seiten 1-5, XP031925352, DOI: 10.1109/PESA.2011.5982898ISBN: 978-1-4577-0205-1 beschäftigt sich mit der Positionsdetektion von sensorlosen DC Motoren basierend auf einem spezifischen Beobachtersystem.

Die Publikation von OLIVIERI C ET AL: "A novel PLL scheme for a sensorless PMSM drive overcoming common speed reversal problems", POWER ELECTRONICS, ELECTRICAL DRIVES, AUTOMATION AND MOTION (SPEEDAM), 2012 INTERNATIONAL SYMPOSIUM ON, IEEE, 20. Juni 2012 (2012-06-20), Seiten 1051-1056, XP032221790, DOI: 10.1109/ SPEEDAM 2012.6264468 ISBN: 978-1-4673-1299-8 beschäftigt sich mit PLL Verfahren für sensorlose Antriebe mit dem Ziel Überwindung allgemeiner Geschwindigkeitsumkehrprobleme.

Derzeit gibt es allerdings Kommutierungsverfahren, mit denen ein EC-Motor auch unterhalb einer Mindestdrehzahl d. h. insbesondere beim Motoranlauf vom Stillstand weg, nicht blind gesteuert werden muss. Dazu werden bei Stillstand des Rotors kurze Stromimpulse zu den Rotorspulen gesendet, die den Motor zwar nicht in Bewegung versetzen, aber durch das magnetische Feld des Rotors beeinflusst werden. Wenn Magnetfeldlinien die Motorspulen schneiden, wird nach dem Generatorprinzip in diesen Spulen auch bei Motorbetrieb eine Spannung induziert. Diese induzierte Spannung ist wie die Betriebsspannung gepolt und wirkt daher dem Rotorstrom entgegen. Sie wird Gegenspannung oder Gegen-EMK genannt.

Gemäß dem Lenzschen Gesetz erzeugt diese elektromotorische Kraft (EMK) ein sekundäres Magnetfeld, das der ursprünglichen Änderung des magnetischen Flusses, die die Motordrehung bewirkt, entgegengesetzt ist. Für einen Motor mit festem magnetischen Fluss und fester Anzahl von Wicklungen, ist die Größe der EMK proportional zur Winkelgeschwindigkeit des Rotors.

Diese EMK-Größe wird auch als "Back EMF Constant" bezeichnet, die verwendet werden kann, um für eine gegebene Drehzahl die rückwirkende EMK zu ermitteln. Das Potenzial über einer Wicklung kann durch Subtrahieren der rückwirkenden EMK von der Versorgungsspannung berechnet werden. Wenn der Elektromotor mit Nenndrehzahl läuft, dann bewirkt die resultierende Spannung (Potenzialdifferenz aus rückwirkender EMK und Versorgungsspannung) einen Stromfluss, der als Nennstrom bezeichnet wird; der Motor liefert hierbei sein Nenndrehmoment.

Ferner sind im Stand der Technik z. B. 3-Phasen Gate-Treiber-IC für sensorlose Kommutierung von bürstenlosen Gleichstrommotoren bekannt, die mit Blockkommutierung (trapezförmig) betrieben werden, wobei für die Phasen-Kommutierung daher keine Positionssensoren erforderlich sind, da die notwendigen Steuersignale von der Gegen-EMK abgeleitet werden.

Um eine sensorlose feldorientierte Regelung implementieren zu können, gibt es diverse bekannte Methoden, die mit mehr oder weniger großem Aufwand anwendbar sind. Dabei erfolgt die Lagebestimmung des Rotors über eine Schätzung. Ein aus dem Stand der Technik bekanntes Model stellt die sogenannte "Model Reference Adaptive Control (MRAC)" Methode dar, die für die Schätzung der Motordrehzahl verwendet wird. Das prinzipielle Vorgehen bei solchen adaptiven Verfahren ist der Vergleich von realen Daten des betrachteten Systems mit Modelldaten. Die adaptiven Verfahren haben eine Rückkopplung zur Verbesserung der geschätzten Größe, damit wird der Fehler zwischen den gemessenen und geschätzten Größen genutzt, um das adaptive Modell (AM) dem Referenzmodell (RM) anzupassen.

Die im Stand der Technik bekannten Verfahren weisen aber diverse Nachteile auf. So wird teilweise eine größere Anzahl an Operatoren benötigt. Ferner ist es regelmäßig erforderlich, dass ein Ausrichtvorgang oder eine Erfassung der Initiallage für den Anlauf z. B. ein geräuschintensives Testsignal benötigt wird. Auch die Zeitspanne für das Ausrichten ist bei den bekannten Verfahren meist nachteilig. Es ist daher wünschenswert, dass ohne Ausrichtzeit sofort gestartet werden kann.

Was den Anlauf und Betrieb des Motors betrifft, wäre es ferner vorteilhaft, wenn auf dynamische Laständerungen reagiert werden kann und bereits der Anlauf unter veränderlichen Lastbedingungen möglich wird. Weiter nachteilig ist bei den im Stand der Technik bekannten Verfahren der Umstand, dass der Übergang vom Anlauf zum stationären Lastbetrieb als mehrstufiger Prozess gestaltet ist. Wünschenswert wäre es, wenn ein kontinuierlicher Prozess vom Anlaufzum Lastbetrieb möglich wäre.

Aufgabe der vorliegenden Erfindung ist es, vorbesagte Nachteile zu überwinden und ein alternatives und verbessertes Verfahren zur sensorlosen Kommutierung, insbesondere zur sensorlosen Sinuskommutierung von EC-Synchronmaschinen bereitzustellen, sowie eine Vorrichtung zum Durchführen eines solchen Verfahrens.

Diese Aufgabe wird gelöst mit einer Schaltungsanordnung zur sensorlosen Kommutierung eines EC-Motors mit den Merkmalen von Anspruch 1 sowie einem Verfahren mit den Merkmalen von Anspruch 5.

Ein Aspekt der Erfindung betrifft, die Rotorlageschätzung. Vorgeschlagen wird daher die Verwendung eines EMK basierten Rotorlageschätzers zur sensorlosen Kommutierung eines EC-Motors mit einem kontinuierlichen, stufenlosen Prozess vom Start (Anlauf) bis zum stationären Betrieb des Motors.

Erforderliche Eingangsgrößen für die Lageschätzung sind die drei Motorphasenströme, sowie die drei an den Klemmen der Kommutierungsschaltung anliegenden elektrischen Spannungen. Diese Klemmengrößen des Motors d. h. die Motorphasenströme und Klemmenspannungen werden im Rotorlageschätzer auf Basis eines bekannten Motormodells vorzugsweise in einer PLL-Struktur (Phase Locked Loop) zu einer Rotorlageinformation verarbeitet, welche aus der EMK der Maschine stammt. Basierend auf der so ermittelten Rotorlage kann die Kommutierung des Motors (z.B. Sinus-U, Feldorientierte-Regelung) erfolgen.

Erfindungsgemäß ist eine Umschaltung zwischen der jeweils gemessenen und der berechneten Klemmenspannung in Abhängigkeit des Kommutierungszustandes vorgesehen. Findet keine Kommutierung statt wird die Klemmenspannung über eine Sensorik erfasst. Wenn aktiv kommutiert wird erfolgt die Berechnung der Klemmenspannungen aus den momentan vorgegebenen Aussteuergraden der zugehörigen Halbbrücken und einer gemessenen Zwischenkreisspannung. Auf diese Weise kann auf ein Filter zum Ausfiltern der pulsfrequenten Anteile im Messsignal verzichtet werden.

Erfindungsgemäß ist weiter vorgesehen, dass eine Phasenregelschleife (PLL-Konfiguration) zur Rotorlageschätzung vorgesehen ist, die eine Transformation der gemessenen Größen in ein synchron mit dem Rotor rotierendes Koordinatensystem durchführt, deren Drehwinkel aus der PLL-Struktur selbst stammt und die der Rotorlage entspricht, welche für die Kommutierung benötigt wird. Ferner umfasst die PLL-Konfiguration einen Beobachter zur Erfassung der EMK-Größen der Maschine im rotierenden Koordinatensystem basierend auf deren Motormodell in dem gleichen Koordinatensystem.

Zur Erzielung einer optimalen Signalqualität der EMK-Größen wird folgendes vorgeschlagen: Der relevante Strom kann durch das Lösen der Maschinengleichungen gemäß den zeitlichen Stromableitungen sowie der Ausführung der Integration mit einer hypothetischen (theoretischen) EMK und den gemessenen Größen ermittelt werden. Die Differenz dieses berechneten Stromes zum gemessenen Strom kann als durch die EMK verursacht angenommen werden. Folglich wird die gewichtete Differenz aus dem berechneten Strom zum gemessenen Strom als die zuvor hypothetisch angenommene EMK zurückgeführt und als EMK-Ausgangssignal des Beobachters ausgegeben.

Eine so konfigurierte Phasenregelschleife hat den Vorteil, dass eine Differenzierung von Messsignalen, wie den Strömen vermieden werden kann und die ausgegebene EMK ein Tiefpassverhalten mit einstellbarer Bandbreite, die an die benötigte Dynamik angepasst werden kann, erhält.

Erfindungsgemäß kann weiter vorgesehen sein, dass Tiefpassfilter für die gemessenen Ströme vorgesehen werden, die zur Berechnung der o.g. Stromdifferenz im Beobachter genutzt werden. Auf diese Weise wird das Anlaufverhalten optimiert, sowie eine insgesamt erhöhte Signalqualität (insbesondere bei störsignalbehafteter Strommessung) der EMK-Schätzung erzielt.

Ein weiterer Aspekt der Erfindung betrifft einen Phasendetektor und einen Phasenregler, wobei der Phasendetektor den Phasenwinkel (Winkelversatz) des EMK-Vektors im d/q-Koordinatensystem in Bezug zur q-Achse ermittelt.

Der Phasenregler ist ausgebildet, um den aus dem Phasendetektor stammenden Winkelversatz z. B. mittels eines PI-Reglers durch Erhöhen oder Erniedrigen der Rotationsgeschwindigkeit des rotierenden Beobachterkoordinatensystems über den Frequenzsollwert für den nachgeschalteten Oszillator auf Null zu regeln. Die Aktivierung des Phasenreglers erfolgt vorzugsweise über einen Detektor. Der Detektor aktiviert den Phasenregler für Mindestsignalstärken der Klemmengrößen, um sicherzustellen, dass nur bei ausreichender Signalstärke und Signalqualität der Schätzung der EMK im Beobachter eine Korrektur der Koordinatensysteme durchgeführt wird.

Die eindeutige Zuordnung der Lage des rotierenden Koordinatensystems zur Drehrichtung und dem Vorzeichen der q-Komponente (bezogen auf das d/q-Koordinatensystem) wird über eine spezifische Ausgangssättigung des Phasenreglers erzielt. Eine positive q-Komponente der EMK bedingt positive Drehrichtung bzw. Frequenz. Ein weiterer Vorteil der erfindungsgemäßen Konfiguration ist darin zu sehen, dass durch die genannte Ausgangssättigung des Phasenreglers eine Mindestfrequenz zur Erzeugung der EMK zum Starten des Motors gewährleistet ist.

Damit die PLL-Konfiguration bei einer bereits rotierenden Maschine diese sicher im eingerasteten Zustand synchronisieren kann (PLL-"Lock") ist mit Vorteil weiter vorgesehen, dass der I-Anteil des Phasenreglers durch eine "Anti-Windup" Beschaltung des Sättigungsgliedes im Falle einer Ausgangssättigung auf einen Initialwert gesetzt wird. Dieser Initialwert wird bei aktiver Kommutierung der Maschine mit dem Wert Null und ansonsten mit dem Drehzahlwert der Initial-Geschwindigkeitsbestimmung aus der EMK gesetzt.

Für die Koordinatensystemtransformation (Rotorposition) erzeugt ein frequenzgesteuerter Oszillator den Drehwinkel durch Integration des vorgegebenen Frequenzsollwertes. Die zeitliche Änderung d. h. Differenzierung des Drehwinkels ergibt die Drehfrequenz des Rotors. Das Eingangssignal des Oszillators kann z. B. direkt als Drehzahlsignal für eine überlagerte Motorkommutierung verwendet werden.

Optional kann vorgesehen sein, dass die anfängliche Geschwindigkeitsbestimmung (Initial-Wert) aus der EMK zur direkten Ermittlung der Drehfrequenz aus den gemessenen Klemmenspannungen bei stromlosem Motor (keine aktive Kommutierung) erfolgt. Durch eine Arkustangensberechnung (atan2) wird aus den ins System transformierten Klemmenspannungen direkt die Rotorlage und die Drehfrequenz aus deren Differenzierung (zeitliche Ableitung) ermittelt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:

Fig. 1  Blockschaltbild einer erfindungsgemäßen Ausführungsform der Schaltungsanordnung;

Fig. 2  Blockschaltbild der Funktionsweise eines Detektors für Mindestsignalstärken;

Fig. 3  Blockschaltbild des EMK-Beobachters;

Fig. 4  Blockschaltbild eines EMK-Beobachters mit zwei Tiefpassfilter;

Fig. 5  Blockschaltbild einer beispielhaften PLL-Regelschleife des Gesamtsystems;

Fig. 6  Blockschaltbild eines Phasendetektors, der in der PLL-Struktur der Figur 5 enthalten ist;

Fig. 7  Blockschaltbild eines Phasenreglers aus der Figur 6;

Fig. 8  Blockschaltbild der PLL-Regelstrecke;

Fig. 9  Blockschaltbild eines Oszillators, wie er in der PLL-Struktur verwendet wird und

Fig. 10  Blockschaltbild der Initial-Geschwindigkeitsmessung.

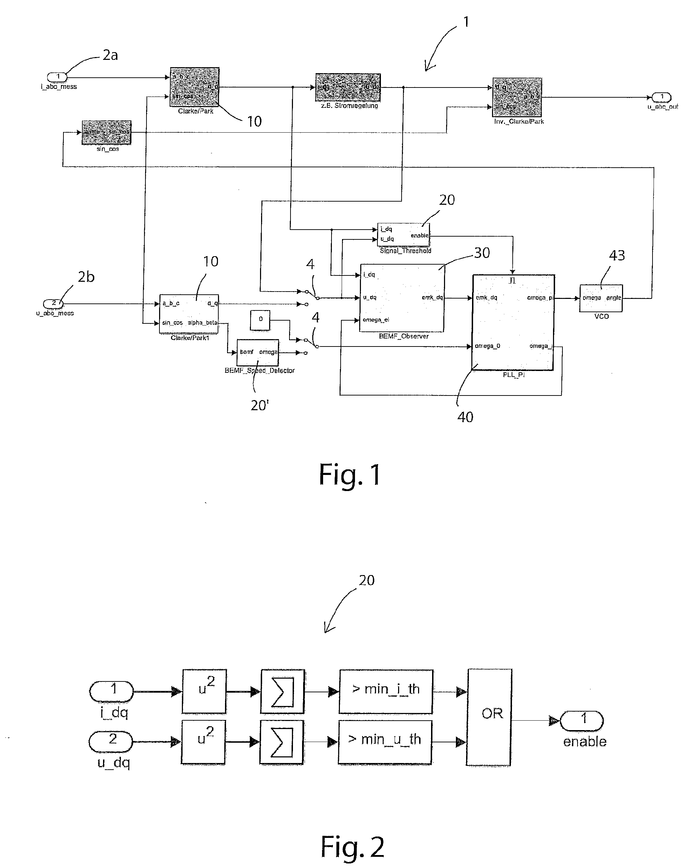

In der Figur 1 ist ein Ausführungsbeispiel der Erfindung in der Form eines Blockschaltbildes dargestellt. Dargestellt ist eine Schaltungsanordnung 1 zur rotorlagegeberlosen Kommutierung eines EC-Motors in einem stufenlosen kontinuierlichen Prozess d. h. vom Anlauf bis zum stationären Betrieb des Motors, wobei die Schaltungsanordnung 1 zur Erfassung der Klemmengrößen des Motors mit diesem über einen Anschluss 2a, 2b verbunden ist. Die Schaltungsanordnung 1 umfasst je einen Clarke-Park-Transformator 10 zur Transformation der entsprechenden Klemmengrößen (Strom und Klemmenspannung) in ein synchron mit dem Rotor des Motors rotierendes d/q-Beobachter-Koordinatensystem sowie einen Detektor 20, der ausgebildet ist zur Bestimmung von Mindestsignalgrößen, einen Beobachter 30 zur Schätzung der EMK (elektromotorischen Kraft) und eine PLL-Struktur 40 zum Ausrichten des Beobachter-Koordinatensystems.

Durch die Transformationen werden die elektrischen Klemmengrößen (Ströme $i_u$, $i_v$, $i_w$ und Spannungen $u_u$, $u_v$, $u_w$) der permanenterregten Synchronmaschine vom statorfesten dreiphasigen abc-System zunächst ins zweiphasige orthogonale alphabeta-System, mittels einer Clarke-Transformation und anschließend weiter in ein rotierendes d/q-Beobachter-Koordinatensystem mittels einer Park-Transformation transformiert. Die Lage des Beobachter-Koordinatensystem wird während des Betriebes durch die gezielte Auswertung der EMK der Synchronmaschine auf das zum Rotorfluss orientierte und zur Modellbildung der Maschine verwendete d/q-System der Maschine hin korrigiert. Im stationären Zustand liegen beide Koordinatensysteme genau übereinander, wobei ein dem Modellsystem entsprechendes reales Systems unterstellt wird. Auf diese Weise kann in diesem Beobachter-Koordinatensystem auch direkt eine Regelung zum Betrieb, bzw. Kommutierung der Maschine (z.B. feldorientierte Regelung) integriert werden oder der Transformationswinkel des Beobachterkoordinatensystems als elektrischer Rotorlagewinkel für eine externe Kommutierung genutzt werden.

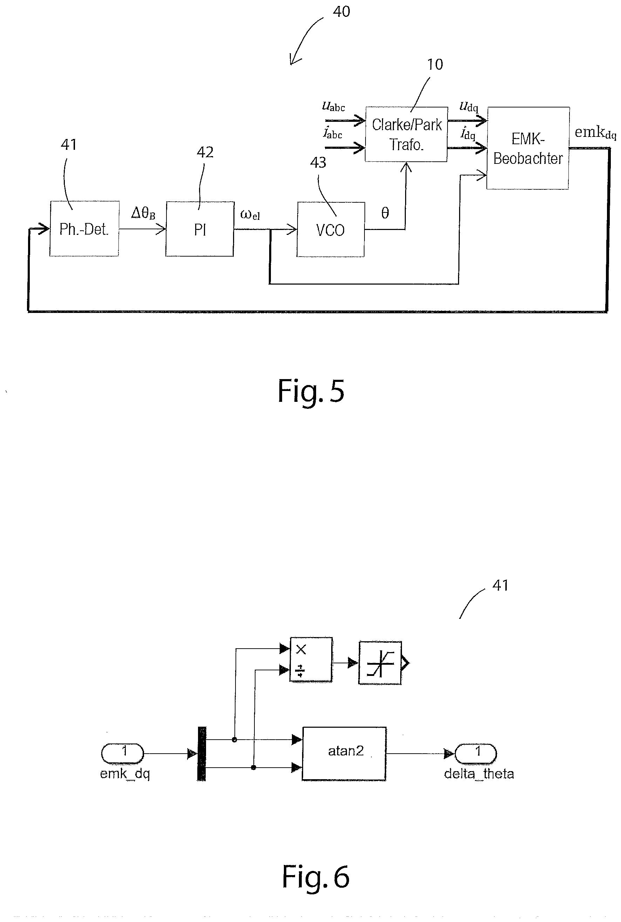

Die PLL-Struktur 40 enthält einen Phasendetektor 41 und einen Phasenregler 42 (siehe Figur 5) und ist ausgebildet, um den aus dem Phasendetektor 41 stammenden Winkelversatz z. B. mittels eines PI-Reglers durch Erhöhen oder Erniedrigen der Rotationsgeschwindigkeit des rotierenden Beobachterkoordinatensystems über den Frequenzsollwert für den nachgeschalteten Oszillator 43 auf Null zu regeln. Wie aus der Figur 1 ersichtlich, erfolgt die Aktivierung des Phasenreglers 42 vorzugsweise über einen Detektor 20, der mit dem Beobachter 30 und der PLL-Struktur 40 über eine Regelschleife verbunden ist. Der Detektor 20 aktiviert den Phasenregler 42 für Mindestsignalstärken (Signal-Threshold) der Klemmengrößen, um sicherzustellen, dass nur bei ausreichender Signalstärke und Signalqualität der Schätzung der EMK im Beobachter 30 eine Korrektur der Koordinatensysteme durchgeführt wird.

Ferner ist in diesem Ausführungsbeispiel ein über einen Schalter 4 mit dem Eingang der PLL-Struktur verbindbarer Detektor 20' (Geschwindigkeitsdetektor) vorgesehen.

Die Funktionsweise, des in Figur 1 gezeigten Detektors 20 wird mit Hilfe des Blockschaltbildes der Figur 2 näher erläutert. Der Detektors 20 dient der Bestimmung der Mindestsignalstärken indem zunächst die Betragsquadrate der Klemmengrößen im d/q-Beobachterkoordinatensystem ermittelt werden. Danach werden die Betragsquadrate mit unteren im System definierten Grenzwerten für die sichere Signalauswertung verglichen. Dies dient dazu, dass nur sicher auswertbare Signale auch berücksichtigt werden. Wird der hinterlegte Schwellwert für Stromamplitude und/oder die Spannungsamplitude überschritten, so wird durch einen Detektor 20 der Phasenregler 42 der PLL-Struktur 40 zur Koordinatensystemkorrektur aktiviert. Sind allerdings die Signalstärken zu gering, so ist keine sichere Schätzung der EMK im Beobachter 30 möglich. Die Festlegung der Schwellwerte erfolgt auf Basis der Eigenschaften der Signalelektronik von Strom- und Spannungsmessung, d. h. auf Basis der zu erwartenden Offsets, der Rauschanteilen und den Signalauflösungen.

Die an den Anschlussklemmen der Maschine anliegenden Klemmenspannungen werden wahlweise entweder durch Messung über ein Widerstandsnetzwerk direkt ermittelt (z. B. im Auslauf oder bei Fremdantrieb) oder alternativ unter Last bei aktiver Bestromung durch das Kommutierungsverfahren auf Basis der vorgegebenen PWM-Aussteuergrade und dem aktuellen Momentanwert der gemessenen Zwischenkreisspannung errechnet.

Die Schätzung der EMK mittels des Beobachters 30 erfolgt im mit Rotordrehfrequenz rotierenden d/q-Beobachterkoordinatensystem auf Basis der an den Klemmen der Maschine anliegenden Spannungen und Ströme, sowie der Modellgleichungen der Synchronmaschine betreffend dieser Koordinaten.

Es wird bei der Schätzung eine theoretische bzw. hypothetische EMK zur Berechnung angenommen. Die geschätzten Ströme werden mit den real an den Klemmen gemessenen Strömen unmittelbar verglichen und die Differenz mit einem definierten Verstärkungsfaktor multipliziert und als die zuvor hypothetisch angenommene EMK gedeutet, da eine Abweichung des Strombetrages bei korrekten Modellgleichungen nur durch eine abweichende EMK hervorgerufen wird.

Dieses so ermittelte Signal wird nun wieder als EMK-Eingangssignal der Stromschätzung zurückgeführt und ferner auch als EMK-Ausgangssignal des Beobachters 30 genutzt. Durch diese Methode der Schätzung wird die EMK aus der Differenz zwischen dem Ausgangssignal eines Integrators und den gemessenen Strömen ermittelt. Somit wird eine hohe Signalqualität erreicht und es werden für die Berechnung keine Ableitungen von gemessenen Signalen benötigt.

Für die Berechnungen im Beobachter werden die idealen Modellgleichungen weitgehend unverändert verwendet, die wie folgt lauten:

Modellgleichung für das rotorflussfeste d/q-System:

$$\begin{pmatrix} u_d \\ u_q \end{pmatrix} = R_s \cdot \begin{pmatrix} i_d \\ i_q \end{pmatrix} + \begin{pmatrix} L_d & 0 \\ 0 & L_q \end{pmatrix} \cdot \frac{d}{dt} \begin{pmatrix} i_d \\ i_q \end{pmatrix} + \omega_{el} \cdot \begin{pmatrix} 0 & -L_q \\ L_d & 0 \end{pmatrix} \cdot \begin{pmatrix} i_d \\ i_q \end{pmatrix} + \omega_{el} \cdot \begin{pmatrix} 0 \\ \Psi_P \end{pmatrix}$$

Modellgleichung für das d/q-Beobachter-Koordinatensystem:

$$\begin{pmatrix} u_{dB} \\ u_{qB} \end{pmatrix} = R_s \cdot \begin{pmatrix} i_{dB} \\ i_{qB} \end{pmatrix} + \begin{pmatrix} L_d & 0 \\ 0 & L_q \end{pmatrix} \cdot \frac{d}{dt} \begin{pmatrix} i_{dB} \\ i_{qB} \end{pmatrix} + \omega_{el} \cdot \begin{pmatrix} 0 & -L_q \\ L_d & 0 \end{pmatrix} \cdot \begin{pmatrix} i_{dB} \\ i_{qB} \end{pmatrix} + \begin{pmatrix} emk_{dB} \\ emk_{qB} \end{pmatrix}$$

Diese idealen Modellgleichungen können bei der vorliegenden Erfindung verwendet werden, obwohl durch einen gegebenenfalls auftretenden Winkelversatz zwischen dem rotierenden Maschinensystem und dem d/q-Beobachterkoordinatensystem ggf. auch die Induktivitätsmatrizen entsprechend angepasst werden müssten. Hierzu wird lediglich eine mögliche EMK-Komponente in d-Richtung ergänzt. Es hat sich gezeigt, dass das Gleichungssystem ansonsten unverändert bleiben kann, wenn die jeweiligen Induktivitäten in d- und q-Richtung identisch sind. Dies ist somit der Fall, wenn die Induktivität $L_d$ gleich der Induktivität $L_q$ ist.

Bei voneinander verschiedenen Induktivitäten kann das Gleichungssystem ebenfalls unverändert bleiben, da dann ein in bekannten Grenzen stabiles und auf eine Winkeldifferenz von Null konvergierendes Verhalten vorliegt.

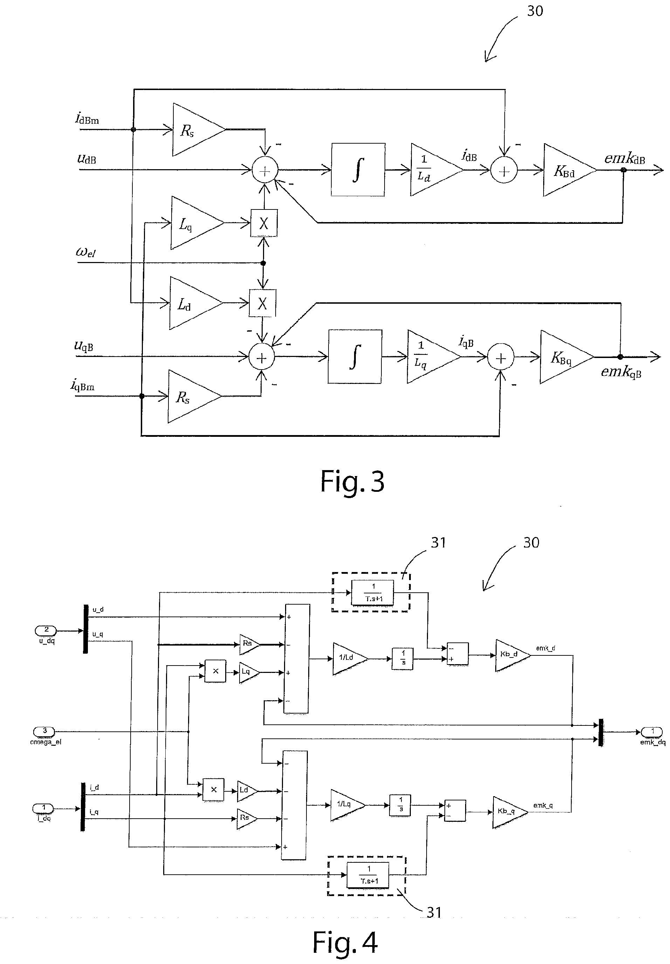

Für die Schätzung der Ströme mit hypothetischer EMK werden die Modellgleichungen nach den Ableitungen der Ströme umgestellt und integriert. Hierzu wird Bezug genommen auf die Figur 3, welche ein Blockschaltbild des EMK-Beobachters gemäß den folgenden Gleichungen für die Ströme und die daraus resultierenden $emk_{db}$ und $emk_{dq}$ Werte zeigt.

$$\begin{pmatrix} i_{dB} \\ i_{qB} \end{pmatrix} = \begin{pmatrix} \frac{1}{L_d} & 0 \\ 0 & \frac{1}{L_q} \end{pmatrix} \cdot \int \left( \begin{pmatrix} u_{dB} \\ u_{qB} \end{pmatrix} - R_s \cdot \begin{pmatrix} i_{dB} \\ i_{qB} \end{pmatrix} - \omega_{el} \cdot \begin{pmatrix} 0 & -L_q \\ L_d & 0 \end{pmatrix} \cdot \begin{pmatrix} i_{dB} \\ i_{qB} \end{pmatrix} - \begin{pmatrix} emk_{dB} \\ emk_{qB} \end{pmatrix} \right) dt$$

Wie bereits zuvor in der allgemeinen Beschreibung der Erfindung erläutert, erfolgt die Berechnung der EMK zunächst durch Differenzbildung der geschätzten Ströme $i_{dqB}$ mit den gemessenen Strömen $i_{dqBm}$ und anschließender Multiplikation mit den Beobachterkonstanten $K_{Bd,q}$.

$$emk_{dB} = K_{Bd} \cdot (i_{dB} - i_{dBm})$$

$$emk_{qB} = K_{Bd} \cdot (i_{dB} - i_{dBm})$$

Die so errechnete EMK wird zur Berechnung von $i_{dqB}$ im oben dargestellten Integrationsterm zurückgeführt. Die ermittelten $emk_{db}$ und $emk_{dq}$ Werte werden somit im Integral der oben genannten Gleichung berücksichtigt. Nach einer Laplace-Transformation erhält man die folgenden Gleichungen als Übertragungsfunktion für die geschätzte EMK:

$$\frac{emk_{dB}}{emk_d} = \frac{1}{s \cdot \frac{L_d}{K_{Bd}} + 1} = \frac{1}{s \cdot T_B + 1}$$

$$\frac{emk_{qB}}{emk_q} = \frac{1}{s \cdot \frac{L_q}{K_{Bq}} + 1} = \frac{1}{s \cdot T_B + 1}$$

Diese Gleichungen werden erfindungsgemäß dazu verwendet die Auslegung des d/q-Beobachtersystems nach den Beobachterkonstanten $K_{BD}$ wie folgt vorzunehmen:

$$K_{Bd} = \frac{L_d}{T_B}$$

$$K_{Bq} = \frac{L_q}{T_B}$$

In der Figur 4 wird ein erfindungsgemäßes Ausführungsbeispiel eines EMK-Beobachters 30 mit einem bzw. hier mit zwei Tiefpassfilter 31 als Blockschaltbild dargestellt. Eine solche Konfiguration sorgt für eine bessere Signalqualität und demnach für ein optimiertes Anlaufverhalten der Synchronmaschine. Wie in der Figur 4 ersichtlich, ist je ein Tiefpassfilter 31 in dem jeweiligen Signalpfad für den Strom integriert und zwar an eine Position, die eine Signalverarbeitung vor der Subtraktion dieser von den berechneten Strömen des Beobachters ermöglicht. Um eine Bandbreitenveränderung des EMK-Beobachtersystems zu vermeiden, kann die Zeitkonstante der Tiefpassfilter 31 auf die dimensionierte Beobachterzeitkonstante $T_B$ für die EMK-Schätzung festgelegt werden.

Im Folgenden wird mit Bezug auf die Figuren 5 bis 9 ein erfindungsgemäßes Ausführungsbeispiel einer PLL-Struktur 40 zum Ausrichten des Beobachter-Koordinatensystems beschrieben. Zunächst ist in der Figur 5 das Gesamtsystem und ferner die Regelschleife prinzipiell dargestellt, bestehend aus einem Phasendetektor 41, einem Phasenregler 42, einem frequenzgesteuerten Oszillator 43, deren Ausgangsgrößen als Systemgrößen für die Clarke-Park-Transformation und den EMK-Beobachter verwendet werden. Die $emk_{dq}$-Werte werden rückgeschleift zum Phasendetektor 41, der den Winkelversatz ermittelt.

Der Phasendetektor 41 ist in der Figur 6 in einem Blockschaltbild näher dargestellt. Der Phasendetektor 41 dient zur Berechnung des Winkelversatzes $\Delta\theta_B$ zwischen dem Maschinenkoordinatensystem und dem Beobachterkoordinatensystem als Bezugssystem auf Basis der Winkellage der EMK im d/q-Beobachterkoordinatensystem. Im Maschinenkoordinatensystem liegt die EMK bei positiver Drehfrequenz definitionsgemäß als zeitliche Ableitung des Flussvektors der Permanentmagnete in der positiven q-Achse. Der Phasendetektor 41 ermittelt demnach die Winkellage der EMK im d/q- Beobachterkoordinatensystem in Bezug zur positiven q-Achse. Ist der Winkelversatz Null, dann rotieren die Systeme deckungsgleich.

Für die Abhängigkeit der EMK im d/q-Beobachterkoordinatensystem von dem Winkelversatzes $\Delta\theta_B$ gilt:

$$emk_{dB} = \sin(\Delta\theta) \cdot emk_q$$

$$emk_{qB} = \cos(\Delta\theta) \cdot emk_q$$

Der Phasendetektor 41 liefert demnach als Ausgangssignal, das wie folgt aus dem Arkustangens der EMK ermittelt wird, den Wert für den Phasenwinkelversatz $\Delta\theta$:

$$\Delta\theta = \arctan\left(\frac{emk_{dB}}{emk_{qB}}\right)$$

Für kleine Winkelversätze kann zur vereinfachten Berechnung auch eine Linearisierung erfolgen und der Arkustangens durch lediglich eine Division der emk-Werte ersetzt werden. Bei dieser genäherten Berechnung ist eine Beschränkung des Wertebereiches über ein anschließendes Sättigungsglied auf den Wertebereich der Arkustangensfunktion sinnvoll, um nur im Bereich annähernder Linearisierung auf dieser Basis zu arbeiten.

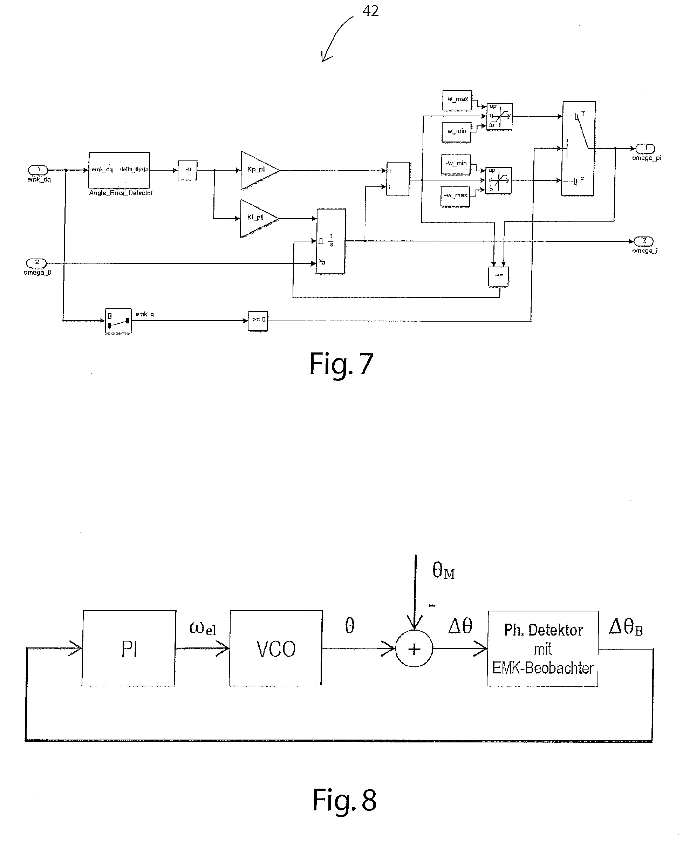

Durch die PLL-Struktur 40 wird das Nachführen des Beobachterkoordinatensystems auf die Winkellage des Maschinensystems auf Basis der d-Komponente der EMK realisiert. Wie zuvor angegeben wird die Winkellage der vom Beobachter 30 geschätzten EMK ermittelt und als Abweichung der Koordinatensysteme dem Phasenregler 42 zugeführt. In der Figur 7 ist ein Blockschaltbild eines Phasenreglers 42 dargestellt.

Der Phasenregler 42 ist ferner in der Figur 8 gezeigt, welche die PLL-Regelstrecke als Blockschaltbild darstellt. Der Phasenregler 42 ist hier als ein PI-Regler dargestellt und regelt über die Frequenzvorgabe für den nachgeschalteten Oszillator 43 zur Erzeugung des Winkelsignals für die Transformation der gemessenen Klemmengrößen ins d/q-Beobachterkoordinatensystem den Winkelversatz auf den Wert Null. D. h. je nachdem ob die EMK nacheilt oder vorausläuft, wird die momentane Frequenz des Beobachterkoordinatensystems reduziert oder erhöht bzw. nach hinten oder vorne korrigiert.

Die Übertragungsfunktion des Phasendetektors 41 mit EMK-Beobachter lautet:

$$\Delta\theta_B \approx \frac{emk_{dB}}{emk_{qB}} = \frac{\frac{emk_q}{s \cdot T_B + 1} \Delta\theta}{emk_q} = \frac{1}{s \cdot T_B + 1} \cdot \Delta\theta$$

Die Übertragungsfunktion des Phasenreglers 42 lautet:

$$\frac{\omega_{el}}{\Delta\theta_B} = -K_P \cdot \left(1 + \frac{K_I}{s}\right)$$

Die Übertragungsfunktion des Oszillators lautet:

$$\frac{\theta}{\omega_{el}} = \frac{1}{s}$$

Daraus lässt sich die Übertragungsfunktion der Regelstrecke nach Figur 8 ermitteln

$$\frac{\theta}{\theta_M} = \frac{F(s)}{F(s)+1} = \frac{s \cdot \frac{1}{K_I}+1}{s^3 \cdot \frac{T_B}{K_P \cdot K_I}+s^2 \cdot \frac{1}{K_P \cdot K_I}+s \cdot \frac{1}{K_I}+1}$$

und durch Auslegung des Nennerpolynoms durch Koeffizientenvergleich

$$s^3 \cdot \frac{T_B}{K_P \cdot K_I} + s^2 \cdot \frac{1}{K_P \cdot K_I} + s \cdot \frac{1}{K_I} + 1 = q_3 T^3 s^3 + q_2 T^2 s^2 + Ts + 1$$

ergeben sich die Einstellparameter $K_P$, $K_I$ und $T_B$ der PLL wie folgt:

$$K_P = \frac{1}{q_2 \cdot T}$$

$$K_I = \frac{1}{T}$$

$$T_B = \frac{q_3}{q_2} \cdot T$$

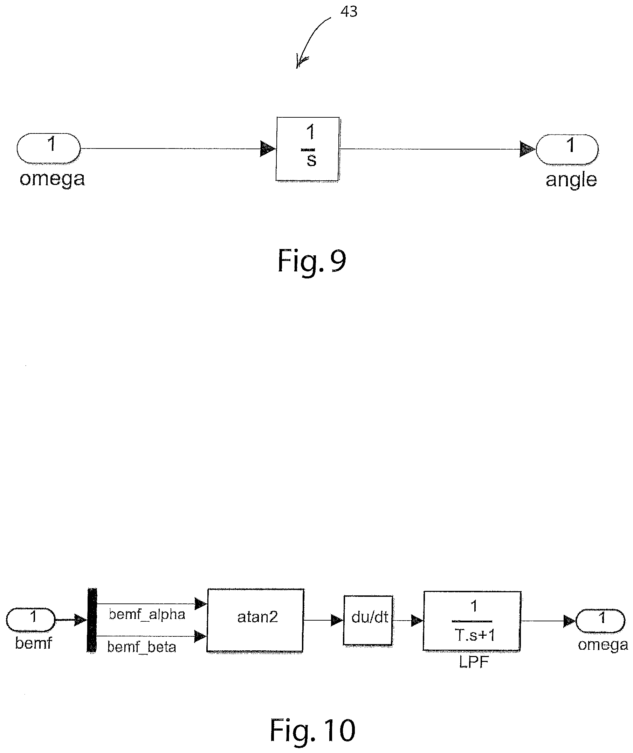

Mittels des Phasenreglers 42 erfolgt ferner eine eindeutige Zuordnung der Drehrichtungen zur Lage der Koordinatensysteme. Je nach Drehrichtung liegt definitionsgemäß eine positive oder negative q-Komponente der EMK vor.
Zur Gewährleistung einer eindeutigen Zuordnung wird daher die Ausgangssättigung des Reglers in Abhängigkeit des Vorzeichens der q-Komponente der EMK verändert und eine Sättigung der ausgegebenen Drehfrequenzen auf den entsprechenden positiven bzw. negativen Wertebereich ausgeführt.
Um den Maschinenanlauf zu gewährleisten, wird der Betrag der Drehzahl auf einen unteren Grenzwert (Minimalwert) begrenzt, so dass sichergestellt ist, dass stets eine EMK auftritt, die den Rotor in Drehbewegung versetzt und die unmittelbar durch den Phasendetektor-Start des Systems bereitgestellt wird. Ferner wird ein oberer Grenzwert (Maximalwert) für den Betrag der Frequenz definiert, welcher über das Anti-Windup des als PI-Regler 42 ausgeführten Phasenreglers 42 eine neue Initialisierung des I-Anteils auslöst, falls die Frequenz beim "Außertrittfallen" des Systems in die Begrenzung laufen sollte. Der I-Anteil des Reglers wird bei der Aktivierung des Phasenreglers ebenfalls auf den aus einer alternativen Initial-Geschwindigkeitsbestimmung ermittelten Drehzahlwert gesetzt. Dies ermöglicht ein Zuschalten des Beobachtersystems auch auf eine bereits mit hoher Drehzahl rotierende Synchronmaschine, ohne den Phasenregler bei nicht vorinitialisiertem I-Anteil unnötig schnell auslegen zu müssen. Die Bestimmung der Initialgeschwindigkeit kann im nicht aktiv bestromten Betrieb direkt aus der rückgemessenen Klemmenspannung der Maschine erfolgen, welche in diesem Fall direkt der EMK entspricht.
In dem Blockschaltbild der Figur 9 ist der frequenzgesteuerte Oszillator 43 (VOC) gezeigt. Dieser erzeugt das für die Transformation der gemessenen Klemmengrößen sowie das für die Motorkommutierung benötigte Winkelsignal. Die Änderungsrate des Winkelsignals ist hierbei proportional zur am Eingang vom Phasenregler zugeführten Frequenz. Der frequenzgesteuerte Oszillator 43 weist daher für Winkel und Winkelgeschwindigkeiten im Bogenmaß ein rein integrierendes Verhalten auf.
Im Blockschaltbild der Figur 10 ist dargestellt, wie die Initial-Geschwindigkeitsbestimmung erfolgt. Diese wird auf Basis der gemessenen Klemmenspannung im stromlosen Zustand der Synchronmaschine z. B. beim Auslauf oder mittels eines Fremdantriebes ermittelt. Im stromlosen Zustand ist die Klemmenspannung gleich der EMK. Zur Bestimmung der Initialgeschwindigkeit wird aus den Clarke-Transformierten gemessene Funktion der Rotorlagewinkel berechnet. Mittels der zeitlichen Differenzierung wird daraus die momentane Rotordrehfrequenz ermittelt.

Durch eine anschließende, wie oben näher erläuterte Tiefpassfilterung kann die durch die Differenzierung verschlechterte Signalqualität verbessert werden, da im Allgemeinen für die Initialgeschwindigkeit keine allzu hohe Dynamik benötigt wird. Durch die Initialgeschwindigkeitsbestimmung kann auch ein Zuschalten des Beobachterkoordinatensystems auf eine bereits mit hoher Drehzahl rotierenden Synchronmaschine erfolgen, ohne eine unnötig schnelle Auslegung des Phasenreglers zu benötigen, da dessen I-Anteil beim Zuschalten mit der Initialdrehfrequenz initialisiert werden kann.

Die Erfindung beschränkt sich in ihrer Ausführung nicht auf die vorstehend angegebenen bevorzugten Ausführungsbeispiele.

**Patentansprüche**

1. Schaltungsanordnung (1) zur rotorlagegeberlosen Kommutierung eines EC-Motors, vorzugsweise zur Sinuskommutierung einer rotorlagegeberlosen EC-Synchronmaschine in einem stufenlosen kontinuierlichen Prozess vom Anlauf bis zum stationären Betrieb des Motors, wobei die Schaltungsanordnung zur Erfassung der Klemmengrößen des Motors mit diesem verbunden ist und wenigstens einen Clarke-Park-Transformator (10) zur Transformation der Klemmengrößen in ein synchron mit dem Rotor des Motors rotierendes d/q-Beobachter-Koordinatensystem aufweist, sowie einen Detektor (20), der ausgebildet ist zur Bestimmung von Mindestsignalgrößen zur Aktivierung einer Koordinatensystemkorrektur, einen Beobachter (30) zur Schätzung der EMK (elektromotorischen Kraft) und eine PLL-Struktur (40) zum Ausrichten des Beobachter-Koordinatensystems, wobei die PLL-Struktur (40) einen Phasenregler (42) und einen Oszillator (43), zum Regeln des Winkelversatzes $\Delta\theta_B$ über eine Frequenzvorgabe des Oszillators (43) aufweist, und wobei mittels des Phasenreglers (42) eine eindeutige Zuordnung der Drehrichtungen zur Lage der Koordinatensysteme erfolgt und zur Gewährleistung einer eindeutigen Zuordnung die Ausgangssättigung des Phasenreglers (42) in Abhängigkeit des Vorzeichens der q-Komponente der EMK verändert wird und eine Sättigung der ausgegebenen Drehfrequenzen auf den entsprechenden positiven bzw. negativen Wertebereich ausgeführt wird.

2. Schaltungsanordnung (1) nach Anspruch 1, **dadurch gekennzeichnet, dass** der Drehwinkel des Beobachter-Koordinatensystems aus der PLL-Struktur (40) erhalten wird und dieser zum Drehwinkel der Rotorlage synchronisiert wird.

3. Schaltungsanordnung (1) nach Anspruch 1 oder 2, **dadurch gekennzeichnet, dass** der Beobachter (30) mit wenigstens einem Tiefpassfilter (31) in dem jeweiligen Signalpfad für die Spannung bzw. den Strom ausgestattet ist.

4. Schaltungsanordnung (1) nach einem der vorhergehenden Ansprüchen, **dadurch gekennzeichnet, dass** die PLL-Struktur (40) einen Phasendetektor (41) zur Berechnung des Winkelversatzes $\Delta\theta_B$ zwischen einem rotierenden Maschinenkoordinatensystem und dem d/q-Beobachterkoordinatensystem aufweist.

5. Verfahren zum Kommutieren einer EC-Synchronmaschine mit einer Schaltungsanordnung nach einem der Ansprüche 1 bis 4, wobei die Klemmengrößen an den Anschlussklemmen der EC-Synchronmaschine mittels eines Rotorlageschätzers auf Basis der EMK der Synchronmaschine und eines bekannten Motormodells in einer PLL-Struktur (40) zur sensorlosen Ermittlung einer Rotorlageinformation verarbeitet und diese zur Kommutierung verwendet wird, wobei die folgenden Schritte im Verfahren zur Kommutierung implementiert sind:

   a. Ermittlung der Klemmengrößen, vorzugsweise der Motorphasenströme und/oder der an den Anschlussklemmen des Motors anliegenden elektrischen Spannung(en);
   b. Transformieren dieser Klemmengrößen mittels Clarke-Park-Transformation in ein d/q-Beobachterkoordinatensystem;
   c. Verarbeiten der Klemmengrößen in der PLL-Struktur (40) zu einer Rotorlageinformation zur Verwendung bei der Kommutierung

   und bei der Transformation in Schritt b) die elektrischen Klemmengrößen vom statorfesten dreiphasigen abc-System zunächst ins zweiphasige orthogonale alphabeta-System, mittels einer Clarke-Transformation und anschließend weiter in ein rotierendes d/q-Beobachterkoordinatensystem mittels einer Park-Transformation transformiert werden.

**6.** Verfahren nach Anspruch 5, **dadurch gekennzeichnet, dass** die PLL-Struktur (40) zur Rotorlagenschätzung die Transformation der gemessenen Klemmengrößen in ein synchron mit dem Rotor rotierendes Koordinatensystem so durchführt, dass dessen Drehwinkel aus der PLL-Struktur (40) selbst stammt und der Rotorlage entspricht, welche für die Kommutierung benötigt wird.

**7.** Verfahren nach einem der Ansprüche 5 oder 6, **dadurch gekennzeichnet, dass** eine Schätzung der EMK der Synchronmaschine mittels eines Beobachters (30), vorzugsweise indirekt durch die Ermittlung der Klemmengrößen aus Schritt a) auf Basis der an der Synchronmaschine angelegten Spannungen erfolgt.

**8.** Verfahren nach einem der vorhergehenden Ansprüche 5 bis 7, **dadurch gekennzeichnet, dass** mittels eines Phasendetektors (41) der PLL-Struktur (40) die Berechnung des Winkelversatzes zwischen Maschinenkoordinatensystem und d/q-Beobachterkoordinatensystem auf Basis der Winkellage der EMK im d/q-Beobachterkoordinatensystem erfolgt.

**9.** Verfahren nach einem der vorhergehenden Ansprüche 5 bis 8, **dadurch gekennzeichnet, dass** der Detektor (20) einen Phasenregler (42) der PLL-Struktur (40) zur Koordinatensystemkorrektur aktiviert, sobald ein systemspezifischer Schwellenwert für die Strom- oder Spannungsamplituden überschritten wird.

**10.** Verfahren nach einem der vorhergehenden Ansprüche 5 bis 9, **dadurch gekennzeichnet, dass** die relative Lage eines d/q-Beobachterkoordinatensystems während des Betriebes durch die gezielte Auswertung der EMK der Synchronmaschine auf das zum Rotorfluss eines Rotors der Synchronmaschine orientierte und zur Modellbildung der Maschine verwendete d/q-Beobachterkoordinatensystem der Maschine hin korrigiert wird und vorzugsweise mit diesem synchronisiert wird.

**11.** Verfahren nach einem der vorhergehenden Ansprüche 5 bis 10, **dadurch gekennzeichnet, dass** mittels eines Berechnungsverfahren durch das Lösen von Maschinengleichungen gemäß den zeitlichen Stromableitungen sowie der Ausführung der Integration mit einer hypothetischen (theoretischen) EMK und den tatsächlich gemessenen Größen eine Stromberechnung erfolgt und die gewichtete Differenz aus dem berechneten Strom zum gemessenen Strom als die zuvor hypothetisch angenommene EMK zurückgeführt und als EMK-Ausgangssignal des Beobachters (30) ausgegeben wird.

**12.** Verfahren nach einem der vorhergehenden Ansprüche 5 bis 11, **dadurch gekennzeichnet, dass** der Drehwinkel für die Rotorpositionskorrektur mittels eines frequenzgesteuerter Oszillator durch Integration des vorgegebenen Frequenzsollwertes erfolgt und durch die zeitliche Änderung des Drehwinkels die Drehfrequenz des Rotors ermittelt wird.

**13.** Verfahren nach Anspruch 5, wobei ein Betrag der Drehzahl auf einen unteren Grenzwert (Minimalwert) begrenzt wird, so dass sichergestellt ist, dass stets eine EMK auftritt, die den Rotor in Drehbewegung versetzt und unmittelbar durch den Phasendetektor-Start des Systems bereitgestellt wird und/oder ferner ein oberer Grenzwert (Maximalwert) für den Betrag der Frequenz definiert wird, welcher über das Anti-Windup des Phasenreglers (42) eine neue Initialisierung des I-Anteils auslöst, falls die Frequenz des Systems in die Begrenzung laufen sollte.

**Claims**

**1.** A circuit arrangement (1) for rotor-position-sensorless commutation of an EC motor, preferably for sinusoidal commutation of a rotor-position-sensorless EC synchronous machine in a stepless continuous process from startup to stationary operation of the motor, wherein the circuit arrangement for the acquisition of the terminal values of the motor is connected to said motor and comprises at least one Clarke-Park transformer (10) for the transformation of the terminal values into a d/q observer coordinate system rotating synchronously with the rotor of the motor, as well as a detector (20) which is designed for the determination of minimum signal values for the activation of a coordinate system correction, an observer (30) for estimating the EMF (electromotive force) and a PLL structure (40) for orienting the observer coordinate system, wherein the PLL structure (40) comprises a phase regulator (42) and an oscillator (43), for regulating the angular offset $\Delta\theta_B$ via a frequency input of the oscillator (43), and wherein, by means of the phase regulator (42), an unequivocal assignment of the rotation directions to the position of the coordinate systems occurs, and, in order to ensure an unequivocal assignment, the output saturation of the phase regulator (42) is changed as a function of the mathematical sign of the q component of the EMF, and a saturation of the output rotation frequencies to the corresponding positive or negative range of values is carried out.

**2.** The circuit arrangement (1) according to Claim 1, **characterized in that** the rotation angle of the observer coordinate system is obtained from the PLL structure (40) and said rotation angle is synchronized with the rotation angle of the rotor position.

**3.** The circuit arrangement (1) according to Claim 1 or 2, **characterized in that** the observer (30) is provided with at least one low-pass filter (31) in the respective signal path for the voltage or the current.

**4.** The circuit arrangement (1) according to any one of the preceding claims, **characterized in that** the PLL structure (40) comprises a phase detector (41) for calculating the angular offset $\Delta\theta_B$ between a rotating machine coordinate system and the d/q observer coordinate system.

**5.** A method for commutation of an EC synchronous machine with a circuit arrangement according to any one of Claims 1 to 4, wherein the terminal values at the connection terminals of the EC synchronous machine are processed by means of a rotor position estimator based on the EMF of the synchronous machine and of a known motor model, preferably in a PLL structure (40) for sensorless determination of rotor position information, and said information is used for the commutation, wherein

the following steps are implemented in the method for commutation:

a. determining the terminal values, preferably the motor phase currents and/or the electrical voltage(s) applied to the connection terminals of the motor;
b. transforming these terminal values by Clarke-Park transformation into a d/q observer coordinate system;
c. processing the terminal values in the PLL structure (40) into rotor position information for use in the commutation

and in the transformation in step b), the electrical terminal values are first transformed from the three-phase stator abc system into the two-phase orthogonal alphabeta system by means of a Clarke transformation, and then they are further transformed into a rotating d/q observer coordinate system by means of a Parke transformation.

**6.** The method according to Claim 5, **characterized in that** the PLL structure (40) for rotor position estimation performs the transformation of the measured terminal values into a coordinate system rotating synchronously with the rotor so that the rotation angle of said coordinate system originates from the PLL structure (40) itself and corresponds to the rotor position which is necessary for the commutation.

**7.** The method according to any one of Claims 5 or 6, **characterized in that** an estimation of the EMF of the synchronous machine occurs by means of an observer (30), preferably indirectly by the determination of the terminal values from step a) based on the voltages applied to the synchronous machine.

**8.** The method according to any one of the preceding Claims 5 to 7, **characterized in that**, by means of a phase detector (41) of the PLL structure (40), the calculation of the angular offset between machine coordinate system and d/q observer coordinate system occurs based on the angular position of the EMF in the d/q observer coordinate system.

**9.** The method according to any one of the preceding Claims 5 to 8, **characterized in that** the detector (20) activates a phase regulator (42) of the PLL structure (40) for the coordinate system correction, as soon as a system-specific threshold value for the current or voltage amplitudes is exceeded.

**10.** The method according to any one of the preceding Claims 5 to 9, **characterized in that** the relative position of a d/q observer coordinate system during operation is corrected by the targeted evaluation of the EMF of the synchronous machine with respect to the d/q observer coordinate systems of the machine oriented toward the rotor flux of a rotor of the synchronous machine and used for the modeling of the machine, and is preferably synchronized with said observer coordinate system.

**11.** The method according to any one of the preceding claims 5 to 10, **characterized in that**, by means of a calculation method, a current calculation occurs, by solving machine equations in accordance with the current time derivates and by performing the integration with a hypothetical (theoretical) EMF and the actually measured values; and the weighted difference between the calculated current and the measured current is returned as the previously hypothetically assumed EMF and is output as EMF output signal of the observer (30).

**12.** The method according to any one of the preceding claims 5 to 11, **characterized in that** the rotation angle for the rotor position correction occurs by means of a frequency-controlled oscillator by integration of the predetermined frequency setpoint, and the rotation frequency of the motor is determined by means of the temporal change of the rotation angle.

**13.** The method according to Claim 5, wherein a value of the rotation speed is limited to a lower limit value (minimum value), such that it is ensured that an EMF always occurs which sets the rotor in rotation and which is provided directly by the phase detector start of the system, and/or, furthermore, an upper limit value (maximum value) for the value of the frequency is defined, which, via the anti-windup of the phase regulator (42), triggers a new initialization of the I portion if the frequency of the system runs into the limitation.

**Revendications**

**1.** Agencement de circuit (1) pour la commutation sans capteur de position de rotor d'un moteur à commutation électronique (EC), de préférence pour la commutation sinusoïdale d'une machine synchrone EC sans capteur de position de rotor, dans un processus à variation continue du démarrage jusqu'au régime permanent du moteur, dans lequel l'agencement de circuit est relié au moteur pour la détection des grandeurs aux bornes de celui-ci et présente au moins un transformateur de Clarke et de Park (10) pour la transformation des grandeurs aux bornes dans un système de coordonnées d/q de l'observateur tournant en synchronisme avec le rotor du moteur, ainsi qu'un détecteur (20) qui est réalisé pour déterminer des grandeurs de signal minimales pour activer une correction de système de coordonnées, un circuit observateur (30) pour estimer la force électromotrice (FEM) et une structure de boucle à phase asservie (PLL) (40) pour aligner le système de coordonnées de l'observateur, la structure PLL (40) présentant un régulateur de phase (42) et un oscillateur (43) pour réguler le décalage angulaire $\Delta\theta_B$ par l'intermédiaire d'une spécification de fréquence de l'oscillateur (43), et dans lequel une attribution univoque des sens de rotation à la position du système de coordonnées a lieu au moyen du régulateur de phase (42), et afin de garantir une attribution univoque, la saturation de sortie du régulateur de phase (42) est modifiée en fonction du signe de la composante q de la FEM et une saturation des fréquences de rotation sorties sur la plage de valeurs positives ou négatives correspondante est effectuée.

**2.** Agencement de circuit (1) selon la revendication 1, **caractérisé en ce que** l'angle de rotation du système de coordonnées de l'observateur est obtenu à partir de la structure PLL (40) et celui-ci est synchronisé avec l'angle de rotation de la position de rotor.

**3.** Agencement de circuit (1) selon la revendication 1 ou 2, **caractérisé en ce que** le circuit observateur (30) est équipé d'au moins un filtre passe-bas (31) sur le chemin de signal respectif pour la tension ou le courant, respectivement.

**4.** Agencement de circuit (1) selon l'une quelconque des revendications précédentes, **caractérisé en ce que** la structure PLL (40) présente un détecteur de phase (41) pour calculer le décalage angulaire $\Delta\theta_B$ entre un système de coordonnées tournant de la machine et le système de coordonnées d/q de l'observateur.

**5.** Procédé de commutation d'une machine synchrone EC comprenant un agencement de circuit selon l'une quelconque des revendications 1 à 4, dans lequel les grandeurs aux bornes au niveau des bornes de connexion de la machine synchrone EC sont traitées au moyen d'un estimateur de position de rotor sur la base de la FEM de la machine synchrone et d'un modèle de moteur connu dans une structure PLL (40) pour la détermination sans capteur d'une information de position de rotor et celle-ci est utilisée pour la commutation, les étapes suivantes étant mises en œuvre dans le procédé de commutation, consistant à :

a. déterminer les grandeurs aux bornes, de préférence les courants de phase moteur et/ou la ou les tensions électriques appliquées aux bornes de connexion du moteur ;
b. transformer ces grandeurs aux bornes au moyen d'une transformation de Clarke et de Park dans un système de coordonnées d/q de l'observateur ;
c. traiter les grandeurs aux bornes dans la structure PLL (40) en une information de position de rotor à utiliser lors de la commutation,

et lors de la transformation à l'étape b), les grandeurs aux bornes électriques sont transformées par le système abc triphasé solidaire du stator d'abord dans le système alpha, bêta orthogonal biphasé au moyen d'une transformation de Clarke et ensuite encore dans un système de coordonnées d/q tournant de l'observateur au moyen d'une transformation de Park.

6.  Procédé selon la revendication 5, **caractérisé en ce que** pour l'estimation de position de rotor, la structure PLL (40) effectue la transformation des grandeurs aux bornes mesurées dans un système de coordonnées tournant en synchronisme avec le rotor de telle sorte que l'angle de rotation de celui-ci provient de la structure PLL (40) elle-même et correspond à la position de rotor qui est nécessaire à la commutation.

7.  Procédé selon l'une quelconque des revendications 5 ou 6, **caractérisé en ce qu'**une estimation de la FEM de la machine synchrone est effectuée au moyen d'un circuit observateur (30), de préférence indirectement par la détermination des grandeurs aux bornes de l'étape a) sur la base des tensions appliquées à la machine synchrone.

8.  Procédé selon l'une quelconque des revendications précédentes 5 à 7, **caractérisé en ce que** le calcul du décalage angulaire entre le système de coordonnées de la machine et le système de coordonnées d/q de l'observateur est effectué au moyen d'un détecteur de phase (41) de la structure PLL (40) sur la base de la position angulaire de la FEM dans le système de coordonnées d/q de l'observateur.

9.  Procédé selon l'une quelconque des revendications 5 à 8, **caractérisé en ce que** le détecteur (20) active un régulateur de phase (42) de la structure PLL (40) pour la correction de système de coordonnées dès qu'une valeur seuil spécifique au système est dépassée pour les amplitudes de courant ou de tension.

10. Procédé selon l'une quelconque des revendications 5 à 9, **caractérisé en ce que** la position relative d'un système de coordonnées d/q de l'observateur est corrigée en cours de fonctionnement par l'évaluation ciblée de la FEM de la machine synchrone selon le système de coordonnées d/q de l'observateur de la machine, orienté sur le flux rotorique d'un rotor de la machine synchrone et utilisé pour la modélisation de la machine, et est de préférence synchronisée avec celui-ci.

11. Procédé selon l'une quelconque des revendications précédentes 5 à 10, **caractérisé en ce qu'**un calcul de courant est effectué au moyen d'un procédé de calcul par la résolution d'équations de machine selon les dérivées de courant temporelles, ainsi que par l'exécution de l'intégration avec une FEM hypothétique (théorique) et les grandeurs réellement mesurées, et la différence pondérée du courant calculé et du courant mesuré est réduite en tant que FEM supposée précédemment de façon hypothétique et sortie en tant que signal de sortie de FEM du circuit observateur (30).

12. Procédé selon l'une quelconque des revendications précédentes 5 à 11, **caractérisé en ce que** l'angle de rotation pour la correction de position de rotor est effectué au moyen d'un oscillateur commandé en fréquence par l'intégration de la valeur de consigne de fréquence prédéfinie, et la fréquence de rotation du rotor est déterminée par la variation temporelle de l'angle de rotation.

13. Procédé selon la revendication 5, dans lequel une quantité de la vitesse de rotation est limitée à une valeur limite inférieure (valeur minimale) de façon à assurer qu'il se produit toujours une FEM qui met le rotor en rotation et qui est fournie directement par le démarrage du détecteur de phase du système, et/ou en outre une valeur seuil supérieure (valeur maximale) est définie pour la quantité de la fréquence qui déclenche par l'intermédiaire de l'effet anti-saturation du régulateur de phase (42) une réinitialisation de la part I si la fréquence du système devait rencontrer la limitation.

Fig. 1

Fig. 2

Fig. 3

Fig. 4

Fig. 5

Fig. 6

42

## Fig. 7

## Fig. 8

43

$$\frac{1}{s}$$

omega                    angle

Fig. 9

bemf

bemf_alpha
bemf_beta

atan2

du/dt

$$\frac{1}{T.s+1}$$
LPF

omega

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100181952 A
- US A1 A
- EP 2061147 A2
- US 8294397 B2
- US 7334854 B1
- EP 1758240 A2
- US 8340848 B2
- US 8760098 B2

**In der Beschreibung aufgeführte Nicht-Patentliteratur**

- Design and Evaluation of a PLL-Based Position Controller for Sensorless Vector Control of Permanent-Magnet Synchronous Machines. **ROLANDO P BURGOS et al.** IEEE INDUSTRIAL ELECTRONICS, IECON 2006 -32ND ANNUAL CONFERENCE ON. IEEE, 01. November 2006, 5081-5086
- A novel position detection method of sensorless brushless DC motor based on sliding mode observer. **LIN QINGHUA et al.** POWER ELECTRONICS SYSTEMS AND APPLICATIONS (PESA), 2011 4TH INTERNATIONAL CONFERENCE ON. IEEE, 08. Juni 2011, 1-5
- A novel PLL scheme for a sensorless PMSM drive overcoming common speed reversal problems. **VON OLIVIERI C et al.** POWER ELECTRONICS, ELECTRICAL DRIVES, AUTOMATION AND MOTION (SPEEDAM), 2012 INTERNATIONAL SYMPOSIUM ON. IEEE, 20. Juni 2012, 1051-1056